(19) Europäisches Patentamt
European Patent Office
Office européen des brevets

(11) **EP 3 012 938 A1**

(12) **EUROPEAN PATENT APPLICATION**

(43) Date of publication:
**27.04.2016 Bulletin 2016/17**

(51) Int Cl.:
***H02J 3/38*** (2006.01)     ***H02J 3/24*** (2006.01)
***H02J 3/16*** (2006.01)

(21) Application number: **14190330.2**

(22) Date of filing: **24.10.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Siemens Aktiengesellschaft
80333 München (DE)**

(72) Inventors:
• **Andresen, Björn
8752 Ostbirk (DK)**
• **Bech, John
8450 Hammel (DK)**
• **Yin, Bo
7430 Ikast (DK)**

(54) **Method to stabilize an electrical grid**

(57)     The invention relates to a method to stabilize an electrical grid, which is subjected to a grid fault, by a wind energy installation like a wind turbine or a wind farm.

A deviation of the grid frequency (Delta_f) from a nominal frequency is determined at a connection point of the wind energy installation with the electrical grid. The grid frequency deviation (Delta_f) is counteracted by an active current, which is fed by a frequency converter of the wind energy installation to the electrical grid. The deviation of the grid voltage (Delta_U) from a nominal voltage is determined at the connection point. The grid voltage deviation (Delta_f) is counteracted by a reactive current, which is fed by the frequency converter of the wind energy installation to the electrical grid. The grid frequency deviation (Delta f) and the grid voltage deviation (Delta_U) are determined at the same time and the active current and the reactive current for the respective counteraction are determined in dependency of each other and in dependency of the maximum current of the frequency converter.

FIG 8

**Description**

The invention relates to a method to stabilize an electrical grid, which is subjected to a grid fault, by a wind energy installation like a wind turbine or a wind farm.

The electrical power, which is supplied form a wind energy installation and/or from a conventional power supply unit to an electrical grid, is regimented and regulated by grid codes.

The grid code specifies requirements, which are given by companies, which are in charge with the supply of electrical power to customers via the grid. Thus energy supply companies, electric utilities as well as national energy government departments contribute to the grid code requirements.

A specific grid code may be related to a national territory and thus addresses the requirements and the performance of the electrical grid there. It is the aim of the grid code to regulate the supply of energy in the grid and the consumption of energy out of the grid in a way that a demanded stability of the electrical grid is reached.

Specific requirements are given for the stability of the electrical grid in view to grid faults.

For example the grid code of Great Britain (UK) prioritizes a grid frequency support, which needs to be provided by the grid-connected power supply units. Other grid codes prioritize a grid voltage support, which needs to be provided by the grid-connected power supply units.

Modern grid codes require that even wind energy installations contribute to the grid voltage support or to the grid frequency support in case of a grid fault.

Thus wind energy installations are controlled accordingly to counteract gird faults in case of a grid frequency deviation or in case of a grid voltage deviation from given respective nominal values.

A typical grid requirement defines a predetermined priority of support, which needs to be given by the wind energy installation: either the grid voltage or the grid frequency is prioritized.

If the grid requirement prioritizes the stability of the grid voltage, grid frequency instabilities might occur in turn.

If the grid requirement prioritizes the stability of the grid frequency, grid voltage instabilities might occur in turn.

Thus a given specific wind energy installation may not support a given grid in an optimized manner.

It is the aim of the invention to provide a more sophisticated method to stabilize and to support an electrical grid, which is subjected to a grid fault, by a wind energy installation.

This aim is reached by the method according to claim 1. Preferred configurations of the invention are addressed in the dependent claims.

According to the method invented an electrical grid, which is subjected to a grid fault, is stabilized by a wind energy installation like a wind turbine or a wind farm.

A deviation of the grid frequency from a nominal frequency is determined at a connection point of the wind energy installation with the electrical grid. At the same time a deviation of the grid voltage from a nominal voltage is determined at the connection point. The grid frequency deviation is counteracted by an active current, which is fed by a frequency converter of the wind energy installation to the electrical grid. The grid voltage deviation is counteracted at the same time by a reactive current, which is fed by the frequency converter of the wind energy installation to the electrical grid. The active current and the reactive current for the respective counteraction are determined in dependency of each other and in dependency of the maximum current of the frequency converter.

Based on the grid frequency deviation and based on the grid voltage deviation a combined feed-in of respective active and reactive current is initiated thus a frequency deviation as well as a voltage deviation are counteracted in dependency to each other and at the same time.

Thus the electrical grid is supported in an optimized and balanced manner.

In a preferred configuration the grid voltage support control is done as a single phase control. Thus grid voltage support is possible even at unsymmetrical faults.

In a preferred configuration the stabilization of the grid according to the invention is combined with a grid support, which is based on another technology:

- the grid is additionally supported by energy, which is stored in energy storage systems like batteries, and/or
- the grid is additionally supported by energy, which is delivered by solar panels, by generators or by hydro power, etc.

Thus in view to these technologies the control of the "active current feed-in" and of the "reactive current feed-in" is done in combination with the controlled supply of energy in the grid (and in case of the storage systems by the consumption of energy out of the grid).

The prioritization between the different technologies depends on the capability and on the response time of the given technology.

For example a wind turbine has mechanical inertia, which is used to support the grid frequency. But this can be done only for a given limited time.

Hydro plants have a time delayed and thus negative impact on a grid frequency decrease. It takes some time for a hydro plant to boost active current or active power in the grid.

Thus if the grid frequency should drop it would be better to counteract this drop immediately by using wind turbines and to hand over this task to a hydro plant afterwards if this is still needed. Thus the hydro plant continues with the feed-in of active current or active power in the grid in a kind of "long-time-perspective".

In turn solar panels should just deliver an possible amount of active current or active power as they can not store active power.

For the feed-in of active current/active power this prioritization should be applied in a preferred configuration:

    1. First use fast technologies that cannot store active power (i.e. solar panels)
    2. Use technologies that can boost active power (i.e. wind turbines, batteries) next
    3. Use "slow" technologies that can give sustained active power (i.e. hydro plant) finally.

For the feed-in of reactive current/reactive power this prioritization should be applied:

    1. First use capacitor or inductor technologies
    2. Use technologies, which are based on fast converters next
    3. Use remaining appropriate technologies finally.

The method invented supports future grid codes, which are expected to demand a more sophisticated grid frequency and grid voltage support due to a higher penetration of the electrical grid by renewable energy sources, like wind energy installations, solar power installations and the like.

The method invented minimizes the risk of black-outs in an electrical power supply grid.

The invention is shown in more detail by help of figures.

FIG 1    and FIG 2 show the Danish grid code requirement in case of a grid voltage deviation or fault,

FIG 3    shows the counteraction of a grid-frequency-deviation by active current,

FIG 4    shows the counteraction of a grid-voltage-deviation by reactive current,

FIG 5    shows the relationship between active current and reactive current,

FIG 6    and FIG 7 refer to FIG 3, FIG 4 and FIG 5 and show the calculation of respective values, which are needed to determine a split between the active and the reactive current, taking into account the maximum current, which could be generated by a given frequency converter of a given wind power installation,

FIG 8    shows a flow-chart-overview of the method invented,

FIG 9    and FIG 10 relates to the grid voltage support, which is done according to the invention.

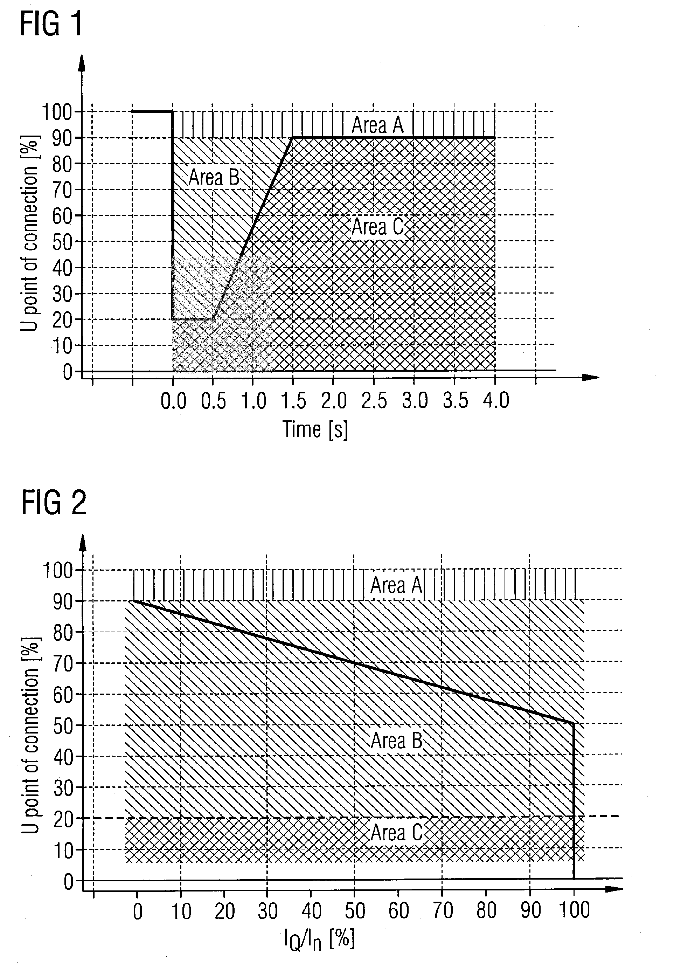

**FIG 1** and **FIG 2** show the Danish grid code requirement to counteract a grid voltage fault.

The horizontal axis of FIG 1 shows the time in seconds, while the vertical axis of FIG 1 shows the percentage change of the voltage U, which is measured at the "point of connection" between the wind energy installation and the electrical grid. Thus the voltage U represents if there is a fault in the grid at this common point of intersection.

The horizontal axis of FIG 2 shows the ratio of the reactive current $I_Q$ and a given nominal current value $I_n$.

The ratio of $I_Q/I_n$ is defined in a way that grid faults are counteracted.

The vertical axis of FIG 2 shows the percentage change of the voltage U, which is measured at the common point of connection.

If the grid voltage U is in a range between 100% and 90% the wind energy installation do not has to perform a specific action to support the grid voltage U.

This range is marked as "area A", thus area A defines the "normal operation".

A grid fault is detected by a voltage dip thus the grid voltage U may enter area B.

In this area B the wind energy installation is not allowed to trip and shall support the grid by a controlled feed-in of reactive current in the grid.

The grid fault is counteracted by the reactive current $I_Q$, which is fed into the grid. The reactive current $I_Q$ is defined by the ration $I_Q/I_n$.

Next the wind energy installation is allowed to trip if the voltage dip enters area C.

The grid fault is counteracted by the reactive current $I_Q$, which is fed into the grid. The reactive current $I_Q$ is defined by the ration $I_Q/I_n$.

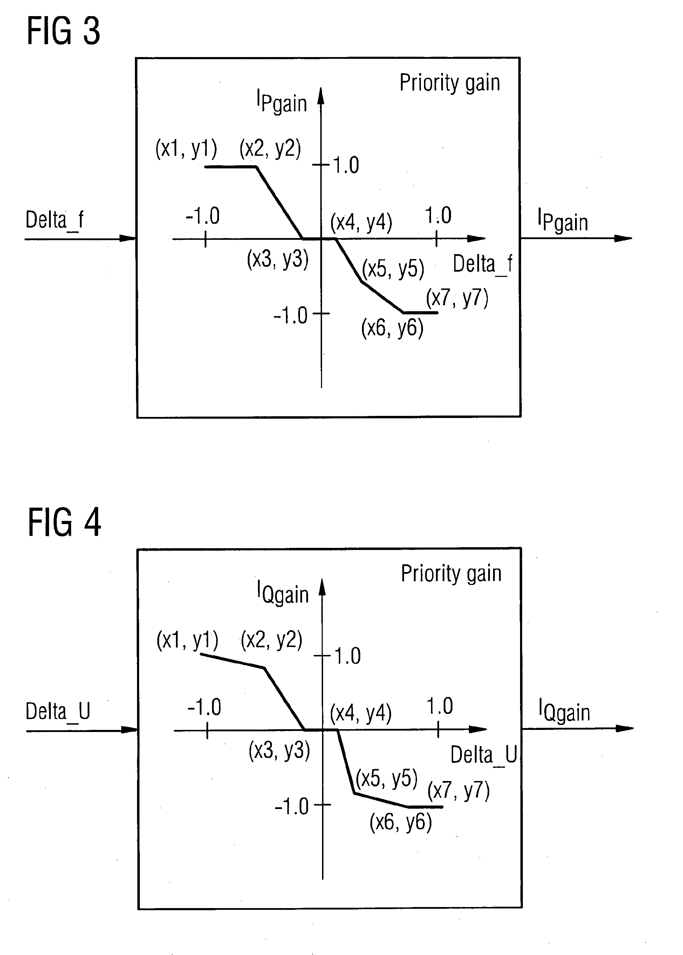

**FIG 3** shows the possibility to counteract grid-frequency-deviations Delta_f by an active current $I_{Pgain}$, which is fed into the electrical grid.

The abbreviation "$I_{Pgain}$" reflects a nominal value, which is used to define the active current needed.

The active current is provided from the wind energy installation to the grid for the grid-frequency-support.

The relationship between the active current $I_{Pgain}$ and the grid frequency deviation Delta_f can be provided by a look-up table, which comprises respective value-combinations (xn/yn).

**FIG 4** shows the possibility to counteract grid-voltage-deviations Delta_U by a reactive current $i_{Qgain}$, which is fed into the electrical grid.

The abbreviation "$I_{Qgain}$" reflects a nominal value, which is used to define the reactive current needed.

The reactive current is provided from the wind energy installation to the grid for the grid-voltage-support.

The relationship between the reactive current $I_{Qgain}$ and the grid voltage deviation Delta_U can be provided by a look-up table, which comprises respective value-combinations (xn/yn).

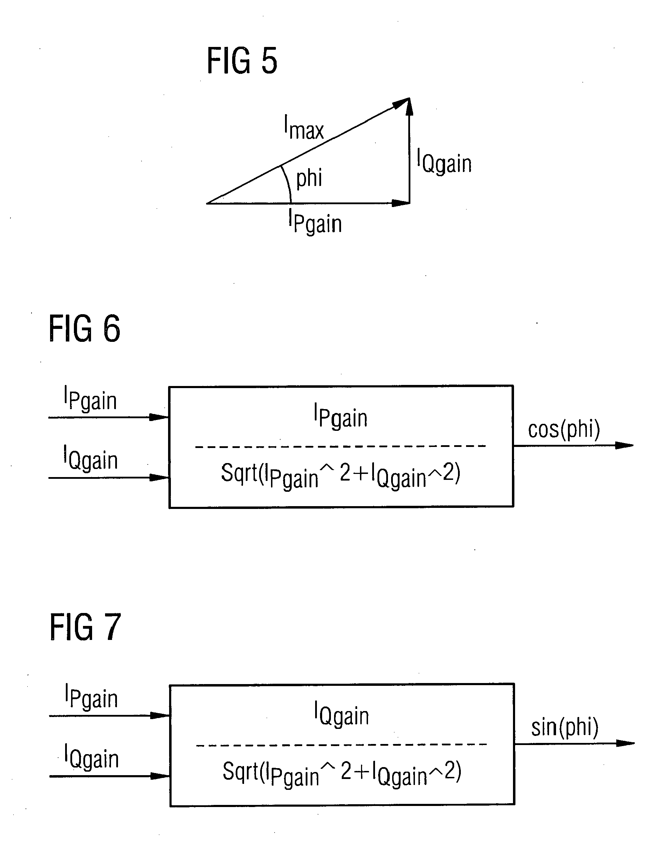

**FIG 5** shows the relationship between the active current $I_{Pgain}$ and of the reactive current $I_{Qgain}$ as shown in FIG 3 and in FIG 4.

According to the invention the grid frequency deviation Delta_f as well as the grid voltage deviation Delta_U are considered and evaluated at the same time.

The grid voltage deviation Delta_U is counteracted by the contribution (feed-in) of the reactive current $i_{Qgain}$.

The grid frequency deviation Delta_f is counteracted by the contribution (feed-in) of the active current $I_{Pgain}$.

The active current portion is calculated based on the active current $I_{Pgain}$ while the reactive current portion is calculated based on the reactive current $I_{Qgain}$.

The active current portion as well as the reactive current portion is provided from the wind energy installation and fed into the grid for its support.

The wind energy installation is equipped with a frequency converter, which has the possibility to control the active current portion and the reactive current portion being fed into the grid.

The frequency converter can deliver a maximum current Imax, which is calculated according to the "Pythagoras equation":

$$(\texttt{Imax})^2 = (\texttt{I}_{\texttt{Pgain}})^2 + (\texttt{I}_{\texttt{Qgain}})^2$$

with $I_{Pgain}$ as active current and with $I_{Qgain}$ as reactive current.

Thus the split between active current and reactive current is given by the equation, taking into account the characteristics of the frequency converter and its maximum current Imax.

The priority of reactive current and of the active current (i.e. ramps and dead-bands in the respective priority gain as shown in FIG 3 and FIG 4) can be chosen in dependency of the nature of the grid, of the sensitivity of the frequency stability, of the sensitivity of the voltage stability or in dependency of the balance between voltage stability and frequency stability.

**FIG 6** and **FIG 7** refer especially to FIG 3, FIG 4 and FIG 5 and show the calculation of the values cos(phi) and sin(phi), which are needed to determine the split between the active current and the reactive current, taking into account the maximum current Imax, which could be generated by the frequency converter of the wind power installation.

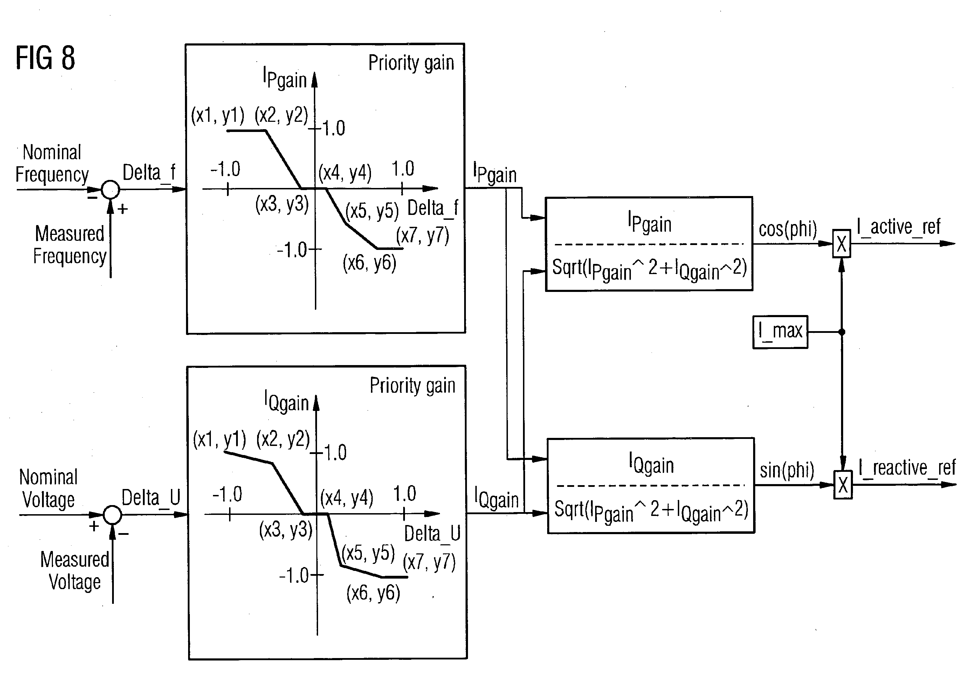

The use of both values cos(phi) and sin(phi) are shown by help of FIG 8.

**FIG 8** shows a flow-chart-overview of the method invented.

The first signal branch, which is shown in the top of FIG 8, relates to the grid frequency deviation Delta_f.

The grid frequency deviation Delta_f is calculated by a comparison of the measured (grid) frequency and a given nominal frequency.

The grid frequency deviation Delta_f is fed into a so called "active-current calculation section", which is used to calculate the nominal active current $I_{Pgain}$.

This section is described in more detail in FIG 3 and could be realized as a kind of "look up table".

The second signal branch, which is shown in the bottom of FIG 8, relates to the grid voltage deviation Delta_U.

The grid voltage deviation Delta_U is calculated by a comparison of the measured (grid) voltage and a given nominal voltage.

The grid voltage deviation Delta_U is fed into a so called "reactive-current calculation section", which is used to calculate the nominal reactive current $I_{Qgain}$.

This section is described in more detail in FIG 4 and could be realized as a kind of "look up table".

The nominal active current $I_{Pgain}$ and the nominal reactive current $I_{Qgain}$ are fed as input signals into two respective sections, which are used to calculate the values cos(phi) and sin (phi).

These calculations are even described in the respective figures FIG 6 and FIG 7.

The values of cos(phi) and sin(phi) are multiplied with the maximum current Imax, which is given by the respective frequency converter.

The three values cos(phi), sin(phi) and Imax result in a split between a portion of reactive current and a portion of active current, which are used to stabilize the grid frequency and the grid voltage at the same time.

The multiplication of cos(phi) * Imax leads to a reference value I_active_ref.

The multiplication of sin(phi) * Imax leads to a reference value I_reactive_ref.

The values I_active_ref and I_reactive_ref are used asides the frequency converter to calculate the split between the active current and the reactive current.

Thus the values I_active_ref and I_reactive_ref are used to control the output of the wind energy installation and to support the grid frequency as well as the grid voltage at the same time accordingly.

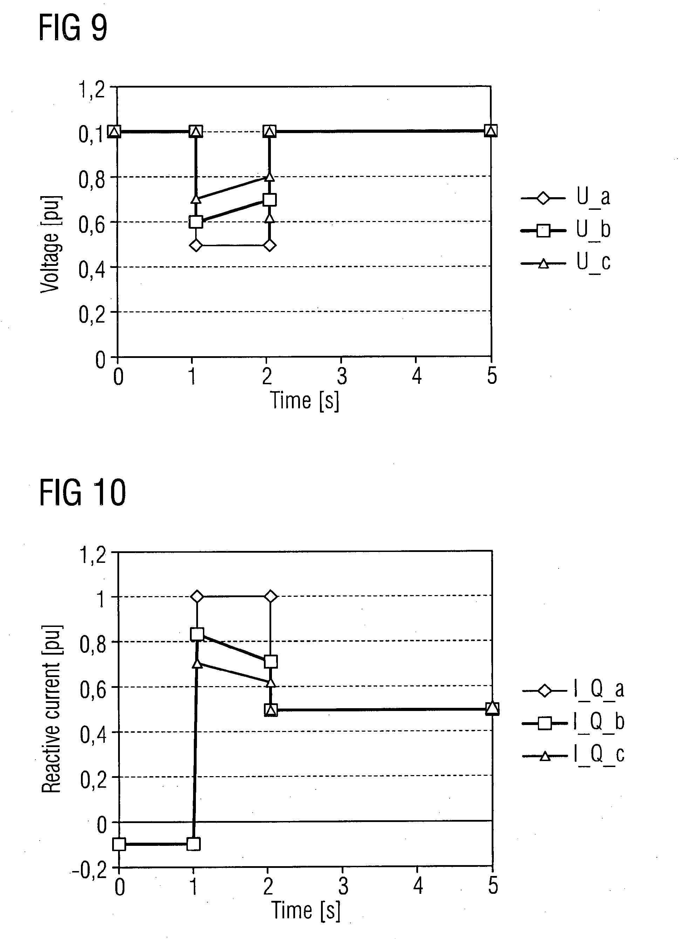

**FIG 9** and **FIG 10** show a grid voltage support, which is done according to the invention.

**FIG 9** shows three single phase voltages for an unsymmetrical grid fault. The three single phase voltages take different values under the grid fault.

For different single phase controls the reactive currents in the different phases are controlled separately.

**FIG 10** shows different phase currents. Each single phase current is controlled as shown in the figures above, especially as shown in FIG 2.

**Claims**

1. Method to stabilize an electrical grid, which is subjected to a grid fault, by a wind energy installation,

   - wherein a deviation of the grid frequency (Delta_f) from a nominal frequency is determined at a connection point of the wind energy installation with the electrical grid, and
   - wherein a deviation of the grid voltage (Delta_U) from a nominal voltage is determined at the connection point at the same time,
   - wherein the grid frequency deviation (Delta_f) is counteracted by an active current, which is fed by a frequency converter of the wind energy installation to the electrical grid, and
   - wherein the grid voltage deviation (Delta_f) is counteracted by a reactive current, which is fed by the frequency converter of the wind energy installation to the electrical grid,
   - wherein the active current and the reactive current for the respective counteraction are determined in dependency of each other and in dependency of the maximum current of the frequency converter.

2. Method according to claim 1,

   - wherein the grid frequency deviation (Delta_f) is calculated by a comparison of the actual grid frequency with a given nominal frequency, and/or
   - wherein the grid voltage deviation (Delta_U) is calculated by a comparison of the actual grid voltage with a given nominal voltage.

3. Method according to claim 1 or to claim 2,

   - wherein the grid frequency deviation (Delta_f) is fed as input signal to a look-up table,
   - wherein the look-up table comprises for a given grid frequency deviation (Delta_f) an aligned nominal active current ($I_{Pgain}$),
   - wherein the aligned nominal active current ($I_{Pgain}$) is used as output signal of the look-up table to adjust the active current, which is fed by the frequency converter into the grid.

4. Method according to claim 1 or to claim 2,

   - wherein the grid voltage deviation (Delta_U) is fed as input signal to a look-up table,
   - wherein the look-up table comprises for a given grid voltage deviation (Delta_U) an aligned nominal reactive current ($I_{Qgain}$),
   - wherein the aligned nominal reactive current ($L_{Qgain}$) is used as output signal of the look-up table to adjust the reactive current, which is fed by the frequency converter into the grid.

5. Method according to claim 3 and to claim 4, wherein the respective look-up table addresses ramps and dead-bands, which are chosen in dependency:

   • of the nature of the grid,
   • of a given sensitivity of the frequency stability,

• of a given sensitivity of the voltage stability, and/or
• of a given balance between voltage stability and frequency stability.

6. Method according to claim 3 and to claim 4,

- wherein the nominal active current ($I_{Pgain}$) and the nominal reactive current ($I_{Qgain}$) are used to calculate these values:

$$\cos(phi) = I_{Pgain} \; / \; (SQRT(I_{Pgain} \; * \; I_{Pgain} \; + \; I_{Qgain} \; * \; I_{Qgain}))$$

$$\sin(phi) = I_{Qgain} \; / \; (SQRT(I_{Pgain} \; * \; I_{Pgain} \; + \; I_{Qgain} \; * \; I_{Qgain}))$$

with:

$I_{Pgain}$ as nominal active current
$I_{Qgain}$ as nominal reactive current

- wherein an active reference value I_active_ref and an reactive reference value I_reactive_ref is calculated according to theses formulas:

$$I\_active\_ref \; = \; \cos(phi) \; * \; Imax,$$

$$I\_reactive\_ref \; = \; \sin(phi) \; * \; Imax$$

with

$$Imax \; = \; (SQRT(I_{Pgain} \; * \; I_{Pgain} \; + \; I_{Qgain} \; * \; I_{Qgain}))$$

as maximum current of the frequency converter, and
- wherein the values I_active_ref and I_reactive_ref are used asides the frequency converter to calculate the split between the active current and the reactive current, which are used to control the output of the wind energy installation and to support the grid frequency as well as the grid voltage at the same time accordingly.

7. Method according to one of the preceding claims, wherein a wind turbine or a wind farm are used as wind energy installation to stabilize the electrical grid.

8. Method according to one of the preceding claims, wherein the electrical grid is additionally stabilized by the feed-in of current from an energy storage system and/or from solar based systems and/or from generators and/or from hydro plant power systems.

FIG 1

FIG 2

## FIG 3

Delta_f →

Priority gain

$I_{Pgain}$

(x1, y1)   (x2, y2)

-1.0   1.0

(x3, y3)   (x4, y4)

(x5, y5)   Delta_f

(x6, y6)   (x7, y7)

-1.0

→ $I_{Pgain}$ →

## FIG 4

Delta_U →

Priority gain

$I_{Qgain}$

(x1, y1)   (x2, y2)

-1.0   1.0

(x3, y3)   (x4, y4)

Delta_U

(x5, y5)   (x7, y7)

(x6, y6)

-1.0

→ $I_{Qgain}$ →

# FIG 5

# FIG 6

# FIG 7

# FIG 8

EP 3 012 938 A1

FIG 9

FIG 10

Europäisches
Patentamt

European
Patent Office

Office européen
des brevets

## EUROPEAN SEARCH REPORT

Application Number

EP 14 19 0330

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Jorge Garcia Martinez: "Voltage Control in Wind Power Plants with Doubly Fed Generators", Aalborg East, Denmark, 1 September 2010 (2010-09-01), pages 1-232, XP055018493, Aalborg, Denmark ISBN: 978-8-78-917992-6 Retrieved from the Internet: URL:http://vbn.aau.dk/files/44428198/jorge _martinez_garcia.pdf [retrieved on 2012-02-06] * page 1 - page 3 * * page 9 * * page 17, paragraph 4 - page 19, paragraph 2 * * page 21, paragraphs 3,4 * * page 32 * * page 44; figure 6.1 * * page 67; figures 9,4 * * pages 62,63 * ----- | 1-8 | INV. H02J3/38 H02J3/24 H02J3/16 |
| X | US 2012/248772 A1 (SHIGEMIZU TETSUO [JP] ET AL) 4 October 2012 (2012-10-04) * abstract * * figures * * paragraph [0008] - paragraph [0032] * * paragraph [00053] - paragraph [00059] * ----- | 1-8 | TECHNICAL FIELDS SEARCHED (IPC) H02J |
| X | WO 2014/040601 A2 (VESTAS WIND SYS AS [DK]) 20 March 2014 (2014-03-20) * abstract; figures * * page 8, line 26 - page 9, line 22 * * page 15, line 21 - page 17, line 23 * ----- -/-- | 1-8 | |

The present search report has been drawn up for all claims

| Place of search | Date of completion of the search | Examiner |
|---|---|---|
| Munich | 29 May 2015 | Hurtado-Albir, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 14 19 0330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/178639 A1 (WOBBEN ALOYS [DE]) 16 September 2004 (2004-09-16) * abstract * * figure 2 * * paragraph [0026] - paragraph [0031] * ----- | 1 | |
| A | EP 1 122 856 A2 (SUMITOMO ELECTRIC INDUSTRIES [JP]; KANSAI ELECTRIC POWER CO [JP]) 8 August 2001 (2001-08-08) * abstract * * claims 1-6 * * figures 1,5 * ----- | 1,8 | |
| A | US 2013/006431 A1 (MARROYO PALOMO LUIS [ES] ET AL) 3 January 2013 (2013-01-03) * abstract * * paragraph [0036] * ----- | 1,8 | |
| A | WO 2014/056504 A2 (VESTAS WIND SYS AS [DK]) 17 April 2014 (2014-04-17) * abstract * * page 4, line 1 - line 23 * * page 7, line 14 - page 10, line 15 * * page 11, line 4 - page 17, line 13 * * figures 1,2 * ----- | 1-8 | TECHNICAL FIELDS SEARCHED (IPC) |
| A | EP 2 573 895 A1 (SIEMENS AG [DE]) 27 March 2013 (2013-03-27) * the whole document * ----- | 1-8 | |
| A | US 2013/176751 A1 (OLEA ENEKO [ES] ET AL) 11 July 2013 (2013-07-11) * the whole document * ----- | 1-8 | |
| A | WO 2014/121794 A1 (VESTAS WIND SYS AS [DK]) 14 August 2014 (2014-08-14) * abstract * * claims * * figures * ----- | 1-8 | |

The present search report has been drawn up for all claims

| Place of search | Date of completion of the search | Examiner |
|---|---|---|
| Munich | 29 May 2015 | Hurtado-Albir, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 3 012 938 A1

## ANNEX TO THE EUROPEAN SEARCH REPORT
## ON EUROPEAN PATENT APPLICATION NO.

EP 14 19 0330

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2015

| Patent document cited in search report | | | Publication date | Patent family member(s) | | | Publication date |
|---|---|---|---|---|---|---|---|
| US 2012248772 | A1 | | 04-10-2012 | NONE | | | |
| WO 2014040601 | A2 | | 20-03-2014 | CN | 104620458 | A | 13-05-2015 |
| | | | | WO | 2014040601 | A2 | 20-03-2014 |
| US 2004178639 | A1 | | 16-09-2004 | AR | 033263 | A1 | 10-12-2003 |
| | | | | AT | 291172 | T | 15-04-2005 |
| | | | | AU | 2002315303 | B2 | 22-12-2005 |
| | | | | BR | 0209079 | A | 10-08-2004 |
| | | | | CA | 2445230 | A1 | 31-10-2002 |
| | | | | CN | 1524162 | A | 25-08-2004 |
| | | | | EP | 1386078 | A1 | 04-02-2004 |
| | | | | ES | 2238576 | T3 | 01-09-2005 |
| | | | | JP | 5307333 | B2 | 02-10-2013 |
| | | | | JP | 2004525598 | A | 19-08-2004 |
| | | | | JP | 2007124898 | A | 17-05-2007 |
| | | | | MX | PA03009788 | A | 30-06-2004 |
| | | | | NO | 20034735 | A | 23-10-2003 |
| | | | | NZ | 528939 | A | 31-08-2006 |
| | | | | PL | 366835 | A1 | 07-02-2005 |
| | | | | PT | 1386078 | E | 31-05-2005 |
| | | | | US | 2004178639 | A1 | 16-09-2004 |
| | | | | WO | 02086315 | A1 | 31-10-2002 |
| EP 1122856 | A2 | | 08-08-2001 | AU | 772218 | B2 | 22-04-2004 |
| | | | | CA | 2333851 | A1 | 03-08-2001 |
| | | | | DK | 2262076 | T3 | 24-09-2012 |
| | | | | EP | 1122856 | A2 | 08-08-2001 |
| | | | | EP | 2262076 | A2 | 15-12-2010 |
| | | | | ES | 2388517 | T3 | 16-10-2012 |
| | | | | JP | 3352662 | B2 | 03-12-2002 |
| | | | | JP | 2001292531 | A | 19-10-2001 |
| | | | | PT | 2262076 | E | 03-09-2012 |
| | | | | TW | 501337 | B | 01-09-2002 |
| | | | | US | 2001012211 | A1 | 09-08-2001 |
| US 2013006431 | A1 | | 03-01-2013 | NONE | | | |
| WO 2014056504 | A2 | | 17-04-2014 | NONE | | | |
| EP 2573895 | A1 | | 27-03-2013 | AU | 2012213941 | A1 | 04-04-2013 |
| | | | | BR | 102012023694 | A2 | 23-12-2014 |
| | | | | CA | 2790222 | A1 | 20-03-2013 |
| | | | | CN | 103023061 | A | 03-04-2013 |
| | | | | DK | 2573895 | T3 | 10-03-2014 |
| | | | | EP | 2573895 | A1 | 27-03-2013 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 14 19 0330

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2015

| Patent document cited in search report | Publication date | Patent family member(s) | | Publication date |
|---|---|---|---|---|
| | | ES | 2448794 T3 | 17-03-2014 |
| | | JP | 2013070603 A | 18-04-2013 |
| | | KR | 20130031227 A | 28-03-2013 |
| | | US | 2013249215 A1 | 26-09-2013 |
| US 2013176751 A1 | 11-07-2013 | CN | 104221241 A | 17-12-2014 |
| | | EP | 2801139 A1 | 12-11-2014 |
| | | US | 2013176751 A1 | 11-07-2013 |
| | | WO | 2013102791 A1 | 11-07-2013 |
| WO 2014121794 A1 | 14-08-2014 | NONE | | |

EPO FORM P0459

For more details about this annex : see Official Journal of the European Patent Office, No. 12/82